# EUROPÄISCHE PATENTSCHRIFT

(11) **EP 1 212 562 B1**
(45) Veröffentlichungstag und Bekanntmachung des Hinweises auf die Patenterteilung: **01.10.2003**
(21) Anmeldenummer: 01956377.4
(22) Anmeldetag: 26.07.2001
(51) Int. Cl.: F16K 31/06, B60T 8/36, B60T 8/50

(54) **ELEKTROMAGNETISCH BETÄTIGTES VENTIL, INSBESONDERE FÜR HYDRAULISCHE BREMSANLAGEN VON KRAFTFAHRZEUGEN**
ELECTROMAGNETICALLY ACTUATED VALVE, ESPECIALLY FOR HYDRAULIC BRAKING SYSTEMS OF MOTOR VEHICLES
SOUPAPE A ACTIONNEMENT ELECTROMAGNETIQUE, EN PARTICULIER POUR SYSTEMES DE FREINAGE HYDRAULIQUES DE VEHICULES AUTOMOBILES

(30) Priorität: 27.07.2000 DE 10036577
(43) Veröffentlichungstag der Anmeldung: 12.06.2002
(73) Patentinhaber: Robert Bosch GmbH, 70422 Stuttgart (DE)
(72) Erfinder: SCHMITT, Holger, 73728 Esslingen (DE); AMBROSI, Massimo, 71672 Marbach (DE)
(86) Internationale Anmeldenummer: DE0102825
(87) Internationale Veröffentlichungsnummer: WO02010627

(56) Entgegenhaltungen:
- EP-A- 0 968 894
- DE-A- 4 445 221
- US-A- 5 145 148
- US-A- 5 735 582

## Beschreibung

### Stand der Technik

Die Erfindung geht aus von einem elektromagnetisch betätigten Ventil nach der Gattung des Patentanspruchs 1.

Es ist schon ein solches Ventil bekannt (DE 196 04 317 A1), bei dem der Stößel mit einem aufgepressten Führungsrohr versehen und in einer Längsbohrung des Ventilkörpers längsbewegbar aufgenommen ist. An dem Führungsrohr greift eine Rückstellfeder an, deren Vorspannung durch Verschieben des Rohres relativ zum Stößel einstellbar ist. Zwischen dem Führungsrohr und der Längsbohrung des Ventilkörpers besteht ein relativ kleines Spiel, was die Entlüftung des Ventildoms erschwert. Luft im Ventil erhöht aber dessen Arbeitsgeräusch.

Aus DE 44 45 221 A1 ist es bekannt, einen Stößel eines Ventils außenseitig mit drei längslaufenden Abflachungen zur Flüssigkeitsführung in einen Ventildom zu versehen. Da aber der Stößel ein relativ großes Spiel zu einer seiner Führung dienenden Längsbohrung eines Ventilkörpers hat, vereinigen sich die entlang den Abflachungen fließenden Flüssigkeitsteilströme im Umfangsbereich des Stößels, so dass im Ventildom vorhandene Luft nur mit Schwierigkeiten in Gegenstromrichtung entlang dem Stößel ableitbar ist.

Ferner ist aus der US 5,145,148 ein elektromagnetisch betätigtes Ventil bekannt, bei dem zwischen einem kugelförmigen Schließglied und einem Anker ein stiftförmiger metallischer Stößel angeordnet ist, auf dem ein aus Kunststoff bestehendes Führungsrohr befestigt ist, so dass Stößel und Führungsrohr einstückig ausgebildet sind. Das Pührungsrohr weist dabei mantelseitig vier voneinander getrennte Längsnuten als Kanäle auf, über welche der Ankerraum mit dem Steuerraum Verbindung hat. Das Führungsrohr weist hier aber einen Abschnitt kleineren Durchmessers auf, der das Führungsrohr in zwei Teile trennt und damit zwischen Führungsrohr und Längsbohrung des Ventilkörpers einen Ringraum bildet, der mit einem schräg im Ventilkörper verlaufenden Anschlusskanal zu einem Auslass 24 verbunden ist. Die vom Steuerraum ausgehenden Kanäle sind auf diese Weise unterbrochen und kommunizieren bereits in diesem Ringraum miteinander, so dass eine zwangsweise Entlüftung des den Anker aufnehmenden Ventildoms kaum möglich ist.

### Vorteile der Erfindung

Das erfindungsgemäße Ventil mit den Merkmalen des Patentanspruchs 1 hat demgegenüber den Vorteil, dass Flüssigkeit aus der Ventilkammer mit relativ geringem Strömungswiderstand durch wenigstens einen Kanal in den Ventildom dringen und dort vorhandene Luft verdrängen kann, welche durch einen anderen Kanal zur Ventilkammer gelangen und dort aus dem Ventil abgeleitet werden kann. Da mehrere getrennte Kanäle als Strömungswege zur Verfügung stehen, die erst im Ventildom miteinander kommunizieren, ist die Entlüftung sehr wirksam.

Durch die in den Unteransprüchen aufgeführten Maßnahmen sind vorteilhafte Weiterbildungen und Verbesserungen des im Patentanspruch 1 beschriebenen Ventils gegeben.

Mit der im Anspruch 2 gekennzeichneten Maßnahme werden in fertigungstechnisch einfacher Weise die zur vorbeschriebenen Funktion erforderlichen Kanäle geschaffen, beispielsweise in einem Strangpressverfahren.

Die im Anspruch 3 offenbarte Weiterbildung der Erfindung begünstigt die Entlüftung des Ventildoms durch am Anker ausgebildete Strömungswege.

Mit der Ausgestaltung des Ventils nach Anspruch 4 wird ein Leiten der Flüssigkeitsströmung in die Kanäle des Führungsrohrs wirksam unterstützt.

Die im Anspruch 6 angegebene Maßnahme stellt sicher, dass zum einen eine Flüssigkeitsströmung entlang dem Stößel weitgehend vermieden wird, zum ändern aber das Schließglied auch bei ungünstigen Toleranzverhältnissen sicher in einen Ventilsitz des Sitzventils findet.

### Zeichnung

Ein Ausführungsbeispiel der Erfindung ist in der Zeichnung vereinfacht dargestellt und in der nachfolgenden Beschreibung näher erläutert. Es zeigen
Figur 1 einen Längsschnitt durch ein elektromagnetisch betätigtes Ventil und
Figur 2 einen Querschnitt entlang der Linie II-II in Figur 1 durch einen Ventilkörper, ein Führungsrohr und einen Stößel des Ventils.

### Beschreibung des Ausführungsbeispiels

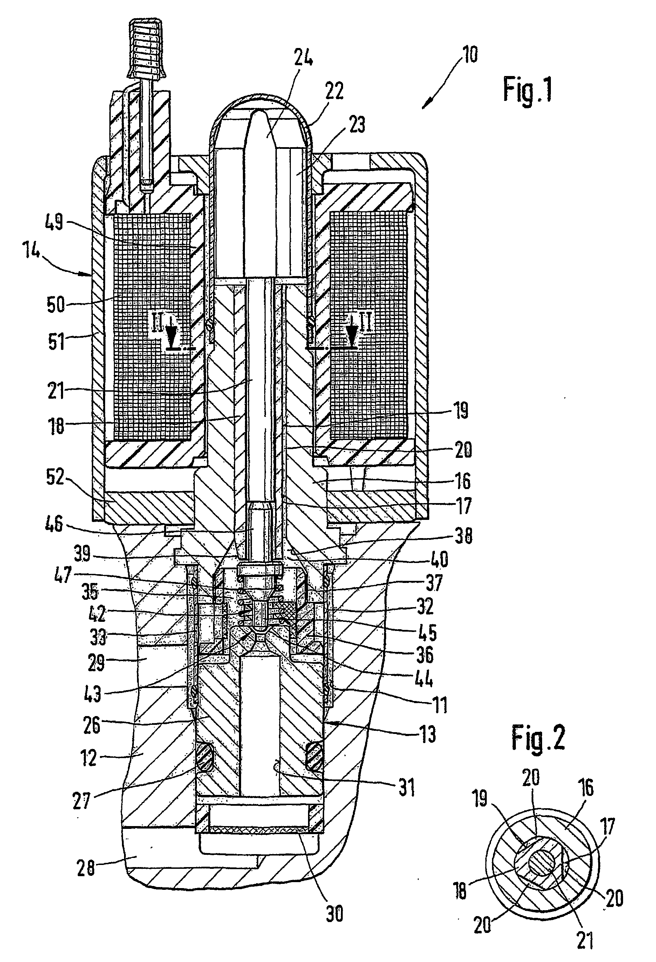

Ein in Figur 1 der Zeichnung dargestelltes, elektromagnetisch betätigtes Ventil 10 für hydraulische Bremsanlagen von Kraftfahrzeugen besteht im wesentlichen aus zwei Baugruppen: einem in einer Stufenbohrung 11 eines Ventilblocks 12 befestigten hydraulischen Teil 13 und einem auf den hydraulischen Teil aufgesteckten elektrischen Teil 14.

Der hydraulische Teil 13 weist einen Ventilkörper 16 mit einer durchgehenden Längsbohrung 17 auf. In diese ist ein Führungsrohr 18 mit drei außenseitigen Abflachungen 19 eingepreßt. Mit den Abflachungen 19 sind mantelseitig des Führungsrohrs 18 über dessen gesamte Länge sich erstreckende, voneinander getrennte Kanäle 20 geschaffen (Figur 2). In dem Führungsrohr 18 ist ein stiftförmiger Stößel 21 mit geringem radialen Spiel längsbewegbar aufgenommen. Seitens des elektrischen Teils 14 ist am Ventilkörper 16 ein Ventildom 22 befestigt. In dem Ventildom 22 ist ein Anker 23 mit längsverlaufenden Nuten 24 längsbewegbar aufgenommen. Der Anker 23 greift an dem Stößel 21 an.

In der Stufenbohrung 11 des Ventilblocks 12 ist ein Ventilsitzteil 26 mit einem umfangsseitig angeordneten Dichtring 27 aufgenommen. Dieser trennt eine Zuströmbohrung 28 des Ventilblocks 12 von einer Abströmbohrung 29. Seitens der Zuströmbohrung 28 ist in der Stufenbohrung 11 eine Filterscheibe 30 angeordnet. Der mit einer Längsbohrung 31 versehene Ventilsitzteil 26 ist mittels einer Hülse 32 mit dem Ventilkörper 16 verbunden. Die Hülse 32 besitzt mantelseitig eine Bohrung 33.

Die Hülse 32 umschließt eine sich zwischen dem Ventilkörper 16 und dem Ventilsitzteil 26 erstreckende Ventilkammer 35. In dieser ist eine Filterhülse 36 aufgenommen, welche in einen durchmessergrößeren Bohrungsabschnitt 37 der Längsbohrung 17 des Ventilkörpers 16 eingreift. An diesen Bohrungsabschnitt 37 schließt sich ein hohlkegelförmiger Übergang 38 der Längsbohrung 17 an. Das Führungsrohr 18, welches sich von der ankerseitigen Stirnseite des Ventilkörpers 16 bis in die Ventilkammer 35 erstreckt, besitzt dort eine kegelförmige Verjüngung 39, so dass die Ventilkammer 35 mit einer im Querschnitt keilförmigen Verengung 40 zu dem Führungsrohr 18 in die drei Kanäle 20 übergeht.

In der ventildomabgewandten Ventilkammer 35 befindet sich ein Schließglied 42 eines Sitzventils 43. Dieses hat einen am Ventilsitzteil 26 ausgebildeten, hohlkegelförmigen Ventilsitz 44, der mit der Längsbohrung 31 des Ventilsitzteils 26 in flüssigkeitsleitender Verbindung steht. Dem Ventilsitz 44 ist ein am Schließglied 42 ausgebildetes Kugelsegment zugeordnet, welches nach einer Abrißkante in einen zylindrischen Abschnitt 45 des Schließglieds 42 übergeht, wie dies aus der eingangs erwähnten Veröffentlichung DE 196 04 317 A1 bekannt ist. Das Schließglied 42 ist ventilsitzabgewandt mit einem Zapfen 46 versehen, mit dem es mit großem radialen Spiel gleichachsig zum Stößel 21 in das Führungsrohr 18 eingreift. In der Ventilkammer 35 ist außerdem eine Rückstellfeder 47 in Form einer Schraubendruckfeder aufgenommen, welche einerseits am Ventilsitzteil 26 und andererseits am Schließglied 42 mit Vorspannung angreift. Unter der Wirkung der Rückstellfeder 47 sind das Schließglied 42, der Stößel 21 und der Anker 23 kraftschlüssig aneinander abgestützt. Wie in Figur 1 dargestellt, nimmt das Sitzventil 43 seine Offenstellung ein, in welcher das mit seinem Zapfen 46 am Stößel 21 angreifende Schließglied 42 über den Stößel den Anker 23 im Anschlag am Ventildom 22 hält.

Der elektrische Teil 14 des Ventils 10 umschließt im wesentlichen den aus dem Ventilblock 12 aufragenden Ventilkörper 16 mit Ventildom 22 und Anker 23. Der elektrische Teil 14 besteht aus einer Spule 49 mit einer elektrischen Wicklung 50, welche von einem magnetflußleitenden Gehäuse 51 mit Jochringscheibe 52 umschlossen sind. In Verbindung mit dem elektrischen Teil 14 ist der Ventilkörper 16 zugleich Polkern des Ventils 10.

Das Ventil 10 ist durch Bestromen seiner elektrischen Wicklung 50 und damit Erzeugen einer Magnetkraftwirkung auf den Anker 23 betätigbar. Die Magnetkraft bewirkt eine Bewegung des Ankers 23 gegen den Ventilkörper 16. Die Ankerbewegung wird über den Stößel 21 auf das Schließglied 42 übertragen. Hierdurch ist das Sitzventil 43 aus der gezeichneten Offenstellung in die Schließstellung schaltbar oder durch Stromsteuerung in beliebige Zwischenstellungen überführbar. Bei geöffnetem Sitzventil 43 ist die Zuströmbohrung 28 des Ventilblocks 12 mit der Abströmbohrung 29 verbunden. Flüssigkeit kann von der Zuströmbohrung 28 durch die Längsbohrung 31 des Ventilsitzteils 26, den Ventilsitz 44, die Ventilkammer 35, die Filterhülse 36, die Bohrung 33 der Hülse 32 zu der Abströmbohrung 29 fließen. Mit der flüssigkeitsgefüllten Ventilkammer 35 steht der Ventildom 22 durch die drei Kanäle 20 in flüssigkeitsleitender Verbindung.

Bei der Erstbefüllung der Bremsanlage kann sich Luft im Ventildom 22 befinden. Die Luft wird in folgender Weise aus dem Ventildom 22 verdrängt: Bei aus der Schließstellung heraus sich öffnendem Sitzventil 43 gelangen aus dem Ventilsitz 44 austretende Flüssigkeitsstrahlen in die dem Ventilsitz gegenüberliegende Verengung 40 der Ventilkammer 35 und von dort durch wenigstens einen Kanal 20 und wenigstens eine Nut 24 des Ankers 23 in den Ventildom 22. Dort verdrängt die Flüssigkeit die vorhandene Luft und reißt diese durch einen anderen Kanal 20 mit sich in die Ventilkammer 35, von der das Flüssigkeits-Luft-Gemisch durch die Abströmbohrung 29 aus dem Ventil 10 abgeleitet wird.

## Patentansprüche

1. Elektromagnetisch betätigtes Ventil (10), insbesondere für hydraulische Bremsanlagen von Kraftfahrzeugen, mit einem Ventilkörper (16), einem mit dem Ventilkörper (16) verbundenen Ventildom (22), einem längsbewegbar im Ventildom (22) aufgenommenen Anker (23), einer Längsbohrung (17) im Ventilkörper (16) und einem in der Längsbohrung (17) angeordneten Führungsrohr (18) mit einem wenigstens mittelbar in der Längsbohrung (17) längsbewegbar geführten Stößel (21) zum Übertragen einer Ankerbewegung auf ein Schließglied (42) eines Sitzventils (43) in einer ventildom- abgewandten Ventilkammer (35), welche flüssigkeitsleitend mit dem Ventildom (22) verbunden ist, **dadurch gekennzeichnet, dass** das den Stößel (21) aufnehmende Führungsrohr (18) in der Längsbohrung (17) des Ventilkörpers (16) befestigt und mantelseitig mit über seine gesamte Länge sich durchgehend erstreckenden, voneinander getrennten Kanälen (20) versehen ist, die erst im Ventildom (22) miteinander kommunizieren.

2. Ventil nach Anspruch 1, **dadurch gekennzeichnet, dass** das Führungsrohr (18) außenseitig mit wenigstens zwei Abflachungen (19) als Kanäle (20) versehen ist.

3. Ventil nach Anspruch 1, **dadurch gekennzeichnet, dass** der Anker (23) mit längsverlaufenden Nuten (24) versehen ist.

4. Ventil nach einem der Ansprüche 1 bis 3, **dadurch gekennzeichnet, dass** die Ventilkammer (35) an ihrer einem Ventilsitz (44) des Sitzventils (43) gegenüberliegenden Seite mit einer im Querschnitt keilförmigen Verengung (40) zu dem Führungsrohr (18) in die Kanäle (20) zwischen dem Ventilkörper (16) und dem Führungsrohr (18) übergeht.

5. Ventil nach einem der Ansprüche 1 bis 4, **dadurch gekennzeichnet, dass** der Anker (23), der Stößel (21) und das Schließglied (42) unter der Wirkung einer am Schließglied (42) angreifenden Rückstellfeder (47) kraftschlüssig aneinander abgestützt sind.

6. Ventil nach Anspruch 5, **dadurch gekennzeichnet, dass** im Führungsrohr (18) der Stößel (21) mit geringem Spiel und das Schließglied (42) mit einem gleichachsig zum Stößel (21) verlaufenden Zapfen (46) mit großem radialen Spiel aufgenommen sind.

## Claims

1. Electromagnetically actuated valve (10), in particular for hydraulic brake systems of motor vehicles, with a valve body (16), with a valve dome (22) connected to the valve body (16), with an armature (23) received longitudinally moveably in the valve dome (22), with a longitudinal bore (17) in the valve body (16), and with a guide tube (18) arranged in the longitudinal bore (17) and having a tappet (21), guided longitudinally moveably at least indirectly in the longitudinal bore (17), for transmitting an armature movement to a closing member (42) of a seat valve (43) in a valve chamber (35) which faces away from the valve dome and which is connected in a fluid-conducting manner to the valve dome (22), **characterized in that** the guide tube (18) receiving the tappet (21) is fastened in the longitudinal bore (17) of the valve body (16) and is provided on the casing side with ducts (20) which extend continuously over its entire length and are separate from one another and which communicate with one another only in the valve dome (22).

2. Valve according to Claim 1, **characterized in that** the guide tube (18) is provided on the outside with at least two flattenings (19) as ducts (20).

3. Valve according to Claim 1, **characterized in that** the armature (23) is provided with longitudinally running grooves (24).

4. Valve according to one of Claims 1 to 3, **characterized in that** the valve chamber (35), on its side located opposite a valve seat (44) of the seat valve (43), merges, with a narrowing (40) of wedge-shaped cross section towards the guide tube (18), into the ducts (20) between the valve body (16) and the guide tube (18).

5. Valve according to one of Claims 1 to 4, **characterized in that** the armature (23), the tappet (21) and the closing member (42) are supported non-positively on one another under the action of a return spring (47) engaging on the closing member (42).

6. Valve according to Claim 5, **characterized in that** the tappet (21) is received with low play in the guide tube (18) and the closing member (42) is received, with a pin (46) running coaxially to the tappet (21), with high radial play in the guide tube (18).

## Revendications

1. Soupape (10) à actionnement électromagnétique, en particulier pour systèmes de freinage de véhicules automobiles, avec un corps de soupape (16), un dôme de soupape (22) relié au corps de soupape (16), un induit (23) mobile longitudinalement dans le dôme de soupape (22), un orifice longitudinal (17) dans le corps de soupape (16) et un tube de guidage (18) disposé dans l'orifice longitudinal (17) avec un poussoir (21) au moins mobile longitudinalement directement dans l'orifice longitudinal (17) pour transmettre un déplacement de l'induit à un élément d'obturation (42) d'une soupape à siège (43) dans une chambre de soupape (35) opposée au dôme de soupape, et en liaison liquide avec le dôme de soupape (22),
**caractérisée en ce que**
le tube de guidage (18) logeant le poussoir (21) est fixé dans l'orifice longitudinal (17) du corps de soupape (16), son enveloppe est dotée de canaux (20) séparés les uns des autres, s'étendant sur toute sa longueur, et qui ne communiquent entre eux que dans le dôme de soupape (22).

2. Soupape selon la revendication 1,
**caractérisée en ce que**
le tube de guidage (18) est doté extérieurement d'au moins deux méplats (19) faisant office de canaux (20).

3. Soupape selon la revendication 1,
**caractérisée en ce que**
l'induit (23) est doté de rainures (24) courant longitudinalement.

4. Soupape selon une des revendications 1 à 3,
**caractérisée en ce que**
la chambre de soupape (35), a son côté opposé à un siège de soupape (44) de la soupape à siège (43), qui communique par un rétrécissement de section cunéiforme (40) du tube de guidage (18) avec les canaux (20) entre le corps de soupape (16) et le tube de guidage (18).

5. Soupape selon une des revendications 1 à 4,
**caractérisée en ce que**
l'induit (23), le poussoir (21) et l'élément d'obturation (42) s'appuient en force les uns contre les autres sous l'effet d'un ressort de rappel (47) appliqué sur l'élément d'obturation (42).

6. Soupape selon la revendication 5,
**caractérisée en ce que**
dans le tube de guidage (18) sont logés le poussoir (21) avec un faible jeu et l'élément d'obturation (42) avec une tige (46) courant selon le même axe que le poussoir (21) avec un jeu radial important.
